# EUROPÄISCHE PATENTSCHRIFT

(11) **EP 2 396 584 B1**
(45) Veröffentlichungstag und Bekanntmachung des Hinweises auf die Patenterteilung: **15.06.2016**
(21) Anmeldenummer: 10701859.0
(22) Anmeldetag: 27.01.2010
(51) Int. Cl.: F16L 31/00, F16L 37/098

(54) **SCHLAUCH-VERBINDUNGSEINRICHTUNG**
HOSE CONNECTION ARRANGEMENT
DISPOSITIF DE RACCORDEMENT POUR FLEXIBLES

(30) Priorität: 11.02.2009 DE 102009008394
(43) Veröffentlichungstag der Anmeldung: 21.12.2011
(73) Patentinhaber: POLYTEC PLASTICS Germany GmbH & Co. KG, 49393 Lohne (DE)
(72) Erfinder: ESDERS, Helen, 49393 Lohne (DE)
(74) Vertreter: dompatent von Kreisler Selting Werner - Partnerschaft von Patent- und Rechtsanwälten mbB
(86) Internationale Anmeldenummer: PCT/EP2010/050928
(87) Internationale Veröffentlichungsnummer: WO 2010/091954

(56) Entgegenhaltungen:
- BE-A- 717 520
- FR-A5- 2 082 115
- US-A- 1 888 741

## Beschreibung

Die Erfindung betrifft eine Schlauch-Verbindungseinrichtung zur unlösbaren Verbindung von insbesondere medienführenden Schläuchen. Insbesondere dient die Schlauch-Verbindungseinrichtung zur Verbindung von Schläuchen im Kraftfahrzeugbereich.

Insbesondere aus Sicherheitsgründen ist es bei Kraftfahrzeugen erforderlich oder ggf. sogar vorgeschrieben, dass medienführende Schläuche unlösbar miteinander verbunden sind. Hierbei wird unter "unlösbar" verstanden, dass ein Trennen der Verbindung nur bei Zerstörung der Verbindungselemente möglich ist. Eine derartige Schlauch-Verbindungseinrichtung ist aus DE 101 07 465 bekannt. Hierbei handelt es sich um eine dreiteilige Schlauch-Verbindungseinrichtung. Eines der beiden Verbindungselemente ist zweiteilig ausgebildet, wobei ein erstes Teil beispielsweise über Verkleben mit dem Schlauch oder Rohr verbunden ist. Mit diesem Teil ist eine im Wesentlichen zylindrisch ausgebildete Haube verbunden. Dies erfolgt beispielsweise formschlüssig mit Hilfe eines Sprengrings oder dadurch, dass die Haube aus einem Blechteil besteht, das durch Umbördeln mit dem ersten Teil verbunden wird. Durch das erste Teil und die Haube ist ein ringförmiger Schlitz ausgebildet, in den das andere Verbindungselement der Verbindungseinrichtung eingesteckt wird. Hierbei weist das andere Verbindungselement einen im Wesentlichen zylindrischen Ansatz auf, der in die ringförmige Ausnehmung eingesteckt wird. Zwischen den beiden Bauteilen ist zur Abdichtung ein O-Ring vorgesehen. Zum festen Verbinden des eingesteckten Verbindungselements mit der Haube weist die Haube mehrere radial verlaufende Schlitze bzw. Öffnungen auf, durch die von außen durch die Haube bzw. Hülse hindurch Federelemente eingesteckt werden können. Die Federelemente greifen in eine Ringnut ein, die am Umfang des eingesteckten Verbindungselements vorgesehen ist. Die in DE 101 07 465 beschriebene Schlauch-Verbindungseinrichtung zum unlösbaren Verbinden von medienführenden Schläuchen im Kraftfahrzeugbereich ist in konstruktiver Hinsicht und auch hinsichtlich der Montage kompliziert. Insbesondere ist es erforderlich, dass die Kappe bzw. Hülse aus einem verformbaren Blechteil besteht, um durch Umbördeln ein Verbinden mit dem anderen Teil des entsprechenden Verbindungselements zu ermöglichen. Das Umbördeln stellt einen zusätzlichen Arbeitsschritt dar, der aufwändig ist.

Aus BE 717520 ist eine lösbare Rastverbindung zur Verbindung von Schläuchen bekannt. An in Längsrichtung verlaufenden Rastarmen sind radial verlaufende Rastnasen vorgesehen, die in montiertem Zustand eine Schulter bzw. einen Vorsprung des anderen Verbindungselements hintergreifen.

Aufgabe der Erfindung ist es, eine Schlauch-Verbindungseinrichtung zur unlösbaren Verbindung von insbesondere medienführenden Schläuchen zu schaffen, durch die auf einfache Weise eine unlösbare Verbindung realisiert ist.

Die Lösung der Aufgabe erfolgt erfindungsgemäß durch die Merkmale des Patentanspruchs 1.

Die erfindungsgemäße Schlauch-Verbindungseinrichtung weist ein erstes sowie ein zweites Verbindungselement auf. Das erste Verbindungselement weist einen ringförmigen Ansatz und das zweite Verbindungselement einen ringförmigen Endbereich auf, wobei der ringförmige Ansatz den ringförmigen Endbereich umgibt. Zwischen dem ringförmigen Ansatz des ersten Verbindungselements und dem ringförmigen Endbereich des zweiten Verbindungselements ist ein Dichtelement, wie ein O-Ring, angeordnet. Insbesondere umgibt der O-Ring den ringförmigen Endbereich und ist vorzugsweise in einer am Außenumfang des ringförmigen Endbereichs vorgesehenen Nut angeordnet. Besonders bevorzugt ist es hierbei, dass sich die Nut erst nach dem Zusammenstecken der beiden Verbindungselemente ausbildet. Dies hat den Vorteil, dass die beiden Verbindungselemente leichter entformbar sind, da keine Hinterschnitte für die Nut vorgesehen sein müssen

Erfindungsgemäß ist an jedem der beiden Verbindungselemente mindestens ein Rastelement vorgesehen. Somit ist an den Verbindungselementen ein Rastelemente-Paar vorgesehen, wobei das Rastelemente-Paar derart ausgebildet ist, dass durch das Zusammenstecken der Verbindungselemente die beiden Rastelemente ineinander rasten und eine unlösbare Verbindung herstellen. Die Verbindung ist insofern unlösbar, das eine zerstörungsfreie Demontage der beiden Verbindungselemente nicht möglich ist. Das Vorsehen von mindestens einem Rastelemente-Paar hat den Vorteil, dass die beiden Verbindungselemente durch einfaches Zusammenstecken miteinander verbunden werden. Ein Vorsehen von zusätzlichen Halteelementen, wie Federelementen, Stiften, Schrauben oder dergleichen, ist nicht erforderlich. Da die unlösbare Verbindung durch einfaches Zusammenstecken der beiden Verbindungselemente der Schlauch-Verbindungseinrichtung erfolgt, ist der Montageaufwand erheblich reduziert.

Erfindungsgemäß ist ein erstes Rastelement, das mit einem der beiden Verbindungselemente verbunden ist, derart ausgebildet, dass es mindestens eine Rastnase aufweist. Die Rastnase hintergreift in montiertem Zustand das zweite, beispielsweise als Steg oder Vorsprung ausgebildete, Rastelement. Hierbei ist die Rastnase in besonders bevorzugter Ausführungsform derart ausgebildet, dass beim Montieren der Verbindungselemente die Rastnase selbst und/ oder das mit der Rastnase zusammenwirkende andere Verbindungselement aus seiner Ruheposition, vorzugsweise durch elastische Verformung, ausgelenkt wird und, sobald die beiden Verbindungselemente vollständig zusammengesteckt sind, wieder in die Ruheposition zurückschnappt, so dass die Rastnase das andere Rastelement hinterschneidet. Die Rastnase des ersten Rastelements hintergreift somit in Längsrichtung der beiden Verbindungselemente das zweite Rastelement. Besonders bevorzugt ist es hierbei, dass das erste Rastelement zwei einander gegenüberliegende Rastnasen aufweist, die insbesondere dasselbe zweite Rastelement hintergreifen. Hierbei ist es bevorzugt, dass die beiden Rastnasen bei der Montage, d.h. beim Zusammenstecken der beiden Verbindungselemente voneinander weg bzw. auseinander gedrückt werden und, sobald die beiden Verbindungselemente vollständig zusammengesteckt sind, wieder in ihre Ausgangsposition zurückschnappen und somit das zweite Rastelement hintergreifen.

Um die Herstellung der beiden Verbindungselemente möglichst einfach und kostengünstig zu gestalten, ist es besonders bevorzugt, dass das mindestens eine erste und das mindestens eine zweite Rastelement einstückig mit dem ersten bzw. zweiten Verbindungselement ausgebildet ist. Besonders bevorzugt ist es hierbei, dass die Elemente aus Kunststoff hergestellt sind, wobei es sich bei den beiden Verbindungselementen vorzugsweise um Kunststoff-Spritzgussteile handelt. Aufgrund der einstückigen Ausgestaltung des ersten und vorzugsweise auch des zweiten Verbindungselements können die Herstellungskosten erheblich verringert werden. Ein Verbinden von Einzelteilen durch Umbördeln, Montieren von Sprengringen und dergleichen, wie in DE 101 07 465 beschrieben, ist vorzugsweise nicht erforderlich.

Besonders bevorzugt ist es, dass mehrere Rastelemente-Paare vorgesehen sind, die insbesondere regelmäßig am Umfang verteilt angeordnet sind. Hierdurch ist eine sichere Verbindung auch dann gewährleistet, wenn beispielsweise eine Biegung des Schlauchs im Bereich der Schlauch-Verbindungseinrichtung erfolgt.

In einer besonders bevorzugten Ausführungsform sind die zweiten Rastelemente in einer Tasche des Verbindungselements angeordnet. Die ersten Rastelemente werden somit zur Verbindung mit den zweiten Rastelementen jeweils in eine Tasche eingeführt. Hierbei kann das mindestens eine zweite Rastelement beispielsweise eine seitliche Ausnehmung in der Tasche sein, in die hakenförmig ausgebildete erste Rastelemente eingreifen. In einer bevorzugten Ausführungsform, die insbesondere technisch einfacher herstellbar ist, sind die zweiten RasteJemente als Stege ausgebildet, die in der Tasche angeordnet sind. Hierbei können die Stege einen rechteckigen oder trapezförmigen Querschnitt aufweisen. Besonders bevorzugt ist es, dass die Tasche ringförmig ausgebildet ist, so dass die vorzugsweise mehreren zweiten Rastelemente in einer gemeinsamen Tasche angeordnet und vorzugsweise als Stege ausgebildet sind. Hierbei ist die Tasche vorzugsweise in Längsrichtung offen, so dass eine kreisringförmige Öffnung entsteht, die in Richtung des anderen Verbindungselements weist. Die insbesondere stegförmig ausgebildeten zweiten Rastelemente sind radial angeordnet und vorzugsweise mit zwei einander gegenüberliegenden Seitenwänden der Tasche verbunden, insbesondere einstückig mit diesen ausgebildet.

Bei einer vorzugsweise kreisringförmig ausgebildeten Tasche sind die ersten Rastelemente, d.h. insbesondere die Rastnasen-Paare, in einem ringförmigen Ansatz ausgebildet. Dieser ringförmige Ansatz wird zur Verbindung der beiden Verbindungselemente in die ringförmige Tasche in Längsrichtung der Verbindungselemente eingesteckt. Hierbei rasten die vorzugsweise mehreren Rastnasen-Paare in die entsprechenden zweiten, insbesondere stegförmig ausgebildeten Rastelemente ein, wobei jeweils ein Rastelemente-Paar ein zweites Rastelement hintergreift, um eine unlösbare Verbindung zu realisieren.

Zur Ausbildung der Rastnasen-Paare ist in den ringförmigen Vorsprung, der in die ringförmige Tasche eingesteckt wird, eine vorzugsweise ähnlich einer Pfeilspitze ausgebildete Ausnehmung vorgesehen. Diese weist eine in Längsrichtung weisende Öffnung auf. Bei der Montage gelangt das stegförmige zweite Rastelement durch diese Öffnung hindurch in die in axialer Richtung sich hieran anschließende Ausnehmung. Hierbei werden die Rastnasen zur Seite gedrückt und schnappen in die Ausgangsposition zurück, sobald die zweiten Rastelemente in die Ausnehmung gelangen, d.h. die beiden Verbindungselemente vollständig zusammengesteckt wurden.

Bei einer besonders bevorzugten Ausführungsform ist zumindest ein Sichtfenster vorgesehen. Das Sichtfenster ist derart angeordnet, dass eines der Rastelemente-Paare durch eine Sichtkontrolle überprüft werden kann.

Hierdurch ist auf einfache Weise eine Überprüfung einer einwandfreien Montage möglich. Das entsprechende Sichtfenster ist vorzugsweise in der die ringförmige Tasche ausbildenden Außenwand vorgesehen. Das Sichtfenster ist vorzugsweise benachbart zu dem mindestens einen zweiten Rastelement angeordnet, so dass durch das Sichtfenster in montiertem Zustand das erste Rastelement, insbesondere das Rastnasen-Paar, sichtbar ist. Hierbei ist das Sichtfenster derart angeordnet, dass, sobald das erste Rastelement sichtbar ist, die beiden Rastelemente unlösbar miteinander verrastet sind. Vorzugsweise ist je Rastelemente-Paar ein Sichtfenster vorgesehen.

Um die Montage der beiden Verbindungselemente zu erleichtern ist es ferner bevorzugt, dass der ringförmige Endbereich des zweiten Verbindungselements und/ oder der ringförmige Ansatz des ersten Verbindungselements eine Einführschräge aufweisen. Mit Hilfe der mindestens einen Einführschräge erfolgt ein automatisches Zentrieren der beiden Verbindungselemente zueinander.

Nachfolgend wird die Erfindung anhand einer bevorzugten Ausführungsform unter Bezugnahme auf die anliegenden Zeichnungen näher erläutert.

Es zeigen:
- Fig.1: eine schematische Seitenansicht einer bevorzugten Ausführungsform der Schlauch-Verbindungseinrichtung in unmontiertem Zustand,
- Fig. 2: die in Fig. 1 dargestellte Schlauch-Verbindungseinrichtung in montiertem Zustand, und
- Fig. 3: eine schematische Längs-Schnittansicht der in Fig. 2 dargestellten Schlauch-Verbindungseinrichtung.

Die in den Fig. dargestellte bevorzugte Ausführungsform einer erfindungsgemäßen Schlauch-Verbindungseinrichtung weist ein erstes Verbindungselement 10 sowie ein zweites Verbindungselement 12 auf. Die beiden Verbindungselemente 10, 12 sind jeweils einstückig ausgebildet und vorzugsweise durch Spritzgießen hergestellt. Es handelt sich in bevorzugter Ausführungsform um Kunststoffteile. Die beiden Verbindungselemente 10, 12 können hierbei über bekannte Verbindungen, wie Verkleben, mit Schläuchen verbunden sein. Die Verbindungselemente können jedoch auch unmittelbar als Endstücke von Schläuchen oder Kunststoffrohren ausgebildet sein und somit einstückig mit einem Kunststoffschlauch oder Kunststoffrohr ausgebildet sein.

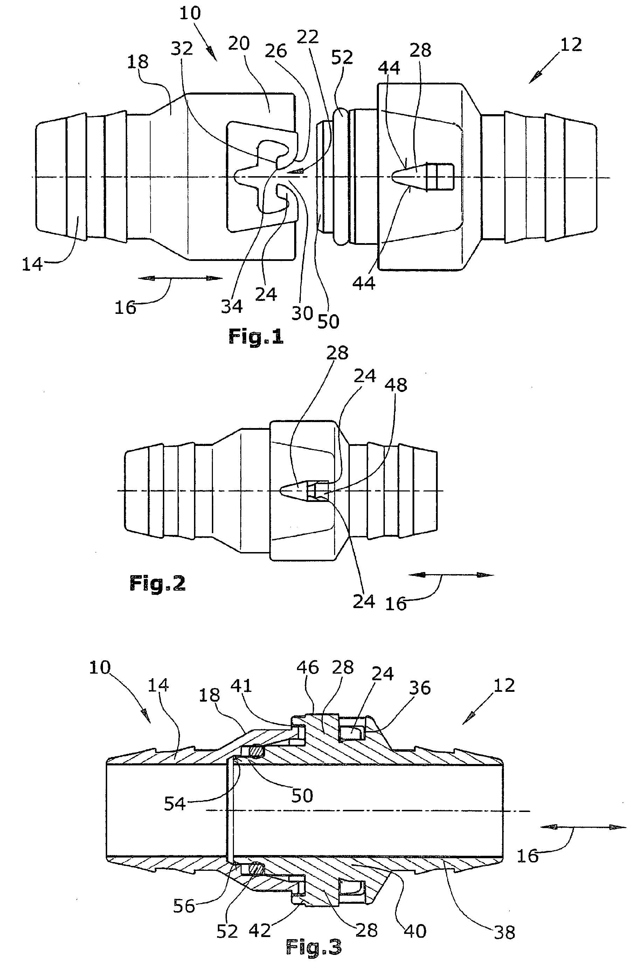

Das erste Verbindungselement 10 weist ein ggf. einstückig mit einem Schlauch oder Rohr ausgebildetes Rohrstück 14 auf. Das Rohrstück 14 ist in Längsrichtung 16 über ein sich konisch nach außen erweiterndes Zwischenstück 18 mit einem im Wesentlichen zylindrisch ausgebildeten ringförmigen Ansatz 20 verbunden. In dem ringförmigen Ansatz 20 ist das erste Rastelement 22 vorgesehen, wobei am Umfang des ringförmigen Ansatzes verteilt mehrere, im dargestellten Ausführungsbeispiel zwei, erste Rastelemente 22 vorgesehen sind. Jedes erste Rastelelement 22 weist zwei einander gegenüberliegende Rastnasen 24 auf. Hierbei sind die beiden Rastnasen 24 derart ausgebildet, dass zwei in Längsrichtung 16, d.h. in Fig. 1 nach links, aufeinander zu laufende Kanten 26 vorgesehen sind. Das erste Rastelement 22 weist somit ein in Richtung eines zweiten Rastelements 28 weisende Öffnung 30 auf. Die Öffnung 30, die sich aufgrund der beiden Kanten 26 verjüngt, geht sodann in eine Halteöffnung 32 über. Die beiden Öffnungen 30, 32 sind über eine schmale Durchtrittsöffnung 34 miteinander verbunden, so dass in Draufsicht eine pfeilartige Öffnung 30, 34, 32 ausgebildet ist.

Korrespondierend zu dem ersten Rastelement 22 ist an dem zweiten Verbindungselement 12 jeweils das zweite Rastelement 28 vorgesehen. Die im dargestellten Ausführungsbeispiel beiden zweiten Rastelemente 28 sind zueinander um 180° versetzt (Fig. 3) angeordnet. Die beiden Rastelemente 28 sind innerhalb einer gemeinsamen ringförmig ausgebildeten Tasche 36 angeordnet. Die Tasche 36 umgibt ein Rohrstück 38 des zweiten Verbindungselements 12 vollständig. Die Tasche 36 weist eine in Längsrichtung weisende, ringförmig ausgebildete Öffnung 41 auf. In die ringförmige Öffnung 41 wird der ringförmige Vorsprung 20 des ersten Verbindungselements 10 zur Montage eingesteckt. Die beiden Rastelemente 28 sind einstückig mit dem zweiten Verbindungselement ausgebildet. Sie sind als Stege ausgebildet, die, bezogen auf die Längsrichtung 16, radial verlaufen und zwischen einer Innenwand 40 und einer Außenwand 42, d.h. einander gegenüberliegenden Seitenwänden 40, 42 der Tasche 36, angeordnet sind.

Beim Einstecken des ringförmigen Vorsprungs 20 des ersten Verbindungselements 10 zur Montage der beiden Verbindungselemente 10, 12 werden durch die zweiten Rastelemente 28 die einander gegenüberliegenden Rastnasen 24 auseinandergedrückt bzw. elastisch verformt. Dies ist aufgrund der schrägen Kanten 26 sowie vorzugsweise an dem zweiten Rastelement vorgesehene korrespondierende Schrägen 44 auf einfache Weise möglich. Sobald die beiden Verbindungselemente 10, 12 vollständig ineinander gesteckt sind, schnappen die Rastnasen 24 wieder in ihre Ausgangsposition (Fig. 1) zurück, so dass sie die zweiten Rastelemente 28 in Längsrichtung 16 hintergreifen.

Zur Ausbildung der Tasche 36 ist somit ein vorzugsweise einstückig mit dem zweiten Verbindungselement 12 ausgebildeter kreiszylindrischer, haubenförmig ausgebildeter Ansatz 46 vorgesehen, der eine der beiden Seitenwände 40 ausbildet. In diesem ist vorzugsweise je Rastelemente-Paar 22, 28 ein Sichtfenster 48 ausgebildet. Das Sichtfenster 48 ist derart angeordnet, dass in montiertem Zustand (Fig. 2) die Rastnasen 24 teilweise sichtbar sind. Hierdurch kann auf einfache Weise kontrolliert werden, ob die Rastnasen 24 eingerastet sind. Hierdurch ist sichergestellt, dass die Rastnasen 24, wie auch aus Fig. 3 ersichtlich, die zweiten Rastelemente 28 in Längsrichtung 16 hintergreifen.

Zwischen dem Zwischenstück 18 und einem im Wesentlichen zylindrischen, ringförmigen Endbereich 50 des zweiten Verbindungselements 12 ist ein Dichtelement in Form eines den ringförmigen Endbereich 50 umgebenden O-Rings 52 angeordnet. Dieser ist in durch die einander gegenüberliegenden Elemente 18, 50 ausgebildeten Teilnuten angeordnet und in der entsprechenden Lage fixiert.

Um das Montieren der beiden Verbindungselemente 10, 12 weiter zu vereinfachen ist im dargestellten Ausführungsbeispiel an der Innenseite des Zwischenstücks 18 sowie an der Außenseite des ringförmigen Endbereichs 50 eine Einführschräge 54, 56 vorgesehen.

## Patentansprüche

1. Schlauch-Verbindungseinrichtung zur unlösbaren Verbindung von insbesondere medienführenden Schläuchen, mit
einem ersten, einen ringförmigen Ansatz (20) aufweisenden Verbindungselement (10),
einem zweiten, einen ringförmigen Endbereich (50) aufweisenden Verbindungselement (12),
wobei der ringförmige Ansatz (20) den ringförmigen Endbereich (50) umgibt und zwischen diesem ein Dichtelement (52) angeordnet ist, und mindestens einem an den Verbindungselementen (10, 12) vorgesehenen Rastelemente-Paar (22, 28), die durch Zusammenstecken der Verbindungselemente (10, 12) ineinander rasten,
wobei mindestens ein erstes Rastelement (22), das mit einem der beiden Verbindungselemente (10, 12) verbunden ist, zwei einander gegenüberliegende Rastnasen (24) aufweist, die das mindestens eine zweite, mit dem anderen Verbindungselement (10, 12) verbundene Rastelement (28) in montiertem Zustand hintergreifen,
**dadurch gekennzeichnet, dass**
das mindestens eine Rastelemente-Paar (22, 28) unlösbar ineinander rastet und
die Rastnasen (24), insbesondere mehrere Rastnasen-Paare (24), durch eine bzw. jeweils eine Öffnung (30) in dem ringförmigen Ansatz (20) ausgebildet sind.

2. Schlauch-Verbindungseinrichtung nach Anspruch 1, **dadurch gekennzeichnet, dass** die Öffnung (30) beim Montieren in Richtung des zweiten Rastelements (28) offen ist.

3. Schlauch-Verbindungseinrichtung nach Anspruch 1 oder 2, **dadurch gekennzeichnet, dass** der ringförmige Ansatz (20) in montiertem Zustand entlang des gesamten Umfangs in die ringförmige Tasche (36) ragt.

4. Schlauch-Verbindungseinrichtung nach einem der Ansprüche 1 bis 3, **dadurch gekennzeichnet, dass** das mindestens eine erste Rastelement (22) und/ oder das mindestens eine zweite Rastelement (28) einstückig mit dem ersten bzw. zweiten Verbindungselement (10, 12) ausgebildet sind.

5. Schlauch-Verbindungseinrichtung nach einem der Ansprüche 1 bis 4, **dadurch gekennzeichnet, dass** das mindestens eine zweite Rastelement (28) innerhalb einer insbesondere ringförmig ausgebildeten Tasche (36) angeordnet ist und vorzugsweise stegförmig ausgebildet ist.

6. Schlauch-Verbindungseinrichtung nach einem der Ansprüche 1 bis 5, **dadurch gekennzeichnet, dass** das mindestens eine zweite Rastelement (28) mit zwei einander gegenüberliegenden Seitenwänden (40, 42) der Tasche (36) verbunden ist und vorzugsweise in radiale Richtung bezüglich einer Längsachse (16) des entsprechenden Verbindungselements (12) verläuft.

7. Schlauch-Verbindungseinrichtung nach einem der Ansprüche 1 bis 6, **dadurch gekennzeichnet, dass** mehrere, vorzugsweise gleichmäßig am Umfang der Verbindungselemente (10, 12) angeordnete Rastelemente-Paare (22, 28) vorgesehen sind.

8. Schlauch-Verbindungseinrichtung nach einem der Ansprüche 1 bis 7, **gekennzeichnet durch** ein Sichtfenstern (48) zur Überprüfung einer einwandfreien Montage für zumindest ein, vorzugsweise alle, Rastelemente-Paare (22, 28).

9. Schlauch-Verbindungseinrichtung nach einem der Ansprüche 1 bis 8, **dadurch gekennzeichnet, dass** der ringförmige Endbereich (50) und/ oder der ringförmige Ansatz (20) eine Einführschräge (54, 56) aufweisen.

## Claims

1. A hose connection arrangement for inseparably connecting hoses, in particular media-conducting hoses, comprising
a first connection element (10) having an annular lug (20),
a second connection element (12) having an annular end region (50),
said annular lug (20) surrounding said annular end region (50), with a sealing element (52) being arranged therebetween, and
at least one pair of latching elements (22,28) provided at said connection elements (10,12), said latching elements inseparably locking into one another by plugging the connection elements (10, 12) together,
at least one first latching element (22), which is attached to one of the two connection elements (10,12), comprises two mutually opposite latching lugs (24) adapted to engage, in the assembled state, behind the at least one second latching element (28) attached to the other connection element (10,12),
**characterized in that**
the at least one latching element pair (22, 28) locks into one another in an inseparable manner, and
the latching lugs (24), in particular a plurality of latching lugs (24), are formed by an opening or a respective opening (30) in the annular log (20).

2. The hose connection arrangement according to claim 1, **characterized in that**, upon mounting, the opening (30) is open towards the second latching element (28).

3. The hose connection arrangement according to claim 1 or 2, **characterized in that**, in the assembled state, said annular lug (20) extends into an annular pocket (36) along the entire circumference.

4. The hose connection arrangement according to one of claims 1 to 3, **characterized in that** said at least one first latching element (22) and/or said at least one second latching element (28) are integrally formed with the first and respectively the second connection element (10,12).

5. The hose connection arrangement according to one of claims 1 to 4, **characterized in that** said at least one second latching element (28) is formed within said preferably annular pocket (36) and is preferably web-shaped.

6. The hose connection arrangement according to any one of claims 1 to 5, **characterized in that** said at least one second latching element (28) is connected to mutually opposite side walls (40,42) of said pocket (36) and preferably extends in radial direction with respect to a longitudinal axis (16) of the corresponding connection element (12).

7. The hose connection arrangement according to any one of claims 1 to 6, **characterized in that** a plurality of pairs of latching elements (22,28) are provided, which preferably are arranged in a uniform manner on the circumference of the connection elements (10,12).

8. The hose connection arrangement according to any one of claims 1 to 7, **characterized by** an optical window (48) for verifying correct mounting of at least one and preferably of all pairs of latching elements (22,28).

9. The hose connection arrangement according to any one of claims 1 to 8, **characterized in that** said annular end region (50) and/or said annular lug (20) comprise an introduction slope.

## Revendications

1. Dispositif de raccordement pour flexibles, destiné à raccorder de façon inamovible en particulier des flexibles transportant des fluides, avec
un premier élément de raccordement (10) présentant un embout (20) de forme annulaire,
un deuxième élément de raccordement (12) présentant une zone d'extrémité (50) de forme annulaire,
dans lequel l'embout (20) de forme annulaire entoure la zone d'extrémité (50) de forme annulaire, et un élément d'étanchéité (52) est disposé de façon intermédiaire, et
avec au moins une paire d'éléments d'encliquetage (22, 28) prévus sur les éléments de raccordement (10, 12) et qui s'encliquètent l'un dans l'autre par l'emboitement des éléments de raccordement (10, 12),
dans lequel au moins un premier élément d'encliquetage (22), qui est raccordé à l'un des deux éléments de raccordement (10, 12), présente deux becs d'encliquetage (24) opposés l'un à l'autre qui, dans l'état monté, agrippent par l'arrière le deuxième élément d'encliquetage (28), au moins au nombre de un, raccordé à l'autre élément de raccordement (10, 12),
**caractérisé en ce que**
la paire d'éléments d'encliquetage (22, 28) au moins au nombre de un s'encliquètent de façon inamovible et
les becs d'encliquetage (24), en particulier plusieurs paires de becs d'encliquetage (24), sont constitués à travers une ou respectivement chaque ouverture (30) dans l'embout (20) de forme annulaire.

2. Dispositif de raccordement pour flexibles selon la revendication 1, **caractérisé en ce que** l'ouverture (30) est ouverte lors du montage en direction du deuxième élément d'encliquetage (28).

3. Dispositif de raccordement pour flexibles selon la revendication 1 ou 2, **caractérisé en ce que**, dans l'état monté, l'embout (20) de forme annulaire dépasse le long de la totalité de la périphérie dans la poche (36) de forme annulaire.

4. Dispositif de raccordement pour flexibles selon l'une des revendications 1 à 3, **caractérisé en ce que** le premier élément d'encliquetage (22) au moins au nombre de un et/ou le deuxième élément d'encliquetage (28), au moins au nombre de un, sont constitués d'une seule pièce avec le premier ou respectivement le deuxième élément de raccordement (10, 12).

5. Dispositif de raccordement pour flexibles selon l'une des revendications 1 à 4, **caractérisé en ce que** le deuxième élément d'encliquetage (28), au moins au nombre de un, est disposé à l'intérieur d'une poche (36) constituée en particulier sous forme annulaire et est de préférence constitué en forme de barrette.

6. Dispositif de raccordement pour flexibles selon l'une des revendications 1 à 5, **caractérisé en ce que** le deuxième élément d'encliquetage (28), au moins au nombre de un, est raccordé à deux parois latérales (40, 42) de la poche (36) qui sont opposées l'une à l'autre et est de préférence placé dans la direction radiale par rapport à un axe longitudinal (16) de l'élément de raccordement (12) correspondant.

7. Dispositif de raccordement pour flexibles selon l'une des revendications 1 à 6, **caractérisé en ce qu'**il est prévu plusieurs paires d'éléments d'encliquetage (22, 28) disposés de préférence de façon régulière sur la périphérie des éléments de raccordement (10, 12).

8. Dispositif de raccordement pour flexibles selon l'une des revendications 1 à 7, **caractérisé par** une fenêtre d'observation (48) pour le contrôle d'un montage conforme pour au moins une, de préférence toutes les paires d'éléments d'encliquetage (22, 28).

9. Dispositif de raccordement pour flexibles selon l'une des revendications 1 à 8, **caractérisé en ce que** la zone d'extrémité (50) de forme annulaire et/ou l'embout (20) de forme annulaire présentent un chanfrein d'introduction (54, 56).
